# EUROPÄISCHE PATENTANMELDUNG

(11) **EP 1 265 125 A2**
(43) Veröffentlichungstag der Anmeldung: **11.12.2002**
(21) Anmeldenummer: 02010507.8
(22) Anmeldetag: 10.05.2002
(51) Int. Cl.: G06F 1/16, G06F 3/147

(54) **Modulares Display für die Bild-und/oder Zeichenwiedergabe**

(30) Priorität: 08.06.2001 DE 10127998
(71) Anmelder: Deutsche Telekom AG, 53113 Bonn (DE)
(72) Erfinder: Dultz, Wolfgang, Prof. Dr., 65936 Frankfurt/M. (DE); Nakhmanson, Raoul, Dr., 60314 Frankfurt/Main 1 (DE); Schmid, Kay, Michael, 60329 Frankfurt/Main (DE)

(57) **Zusammenfassung**

Die Erfindung betrifft ein modulares Display für die Bild- und/oder Zeichenwiedergabe, welches vorzugsweise zur Wiedergabe durch mobile Kommunikationsgeräte ausgegebener Daten vorgesehen ist. Ihr liegt die Aufgabe zugrunde, ein Display zu schaffen, welches im Hinblick auf seine Größe variabel an die insbesondere durch die Art der wiederzugebenden Informationen bestimmten Erfordernisse angepasst werden kann.

Das die Aufgabe lösende modulare Display besteht aus einem Grundmodul sowie untereinander verbindbaren Erweiterungsmodulen, wobei das Grundmodul über eine Steuerund Bildverarbeitungseinheit verfügt. In erfindungswesentlicher Weise ist das Display durch den Nutzer eines das Modul aufnehmenden oder daran anschließbaren elektronischen Gerätes hinsichtlich seiner Größe in diskreten Schritten frei skalierbar. Dabei wird durch die Steuer- und Bildverarbeitungseinheit des Grundmoduls aufgrund eines Datenaustausches mit den Erweiterungsmodulen die Anzahl zusammengefügter Displaymodule erkannt sowie die an dem Gesamtdisplay eingehenden Daten zur Visualisierung auf der gesamten für die Darstellung zur Verfügung stehenden Displayfläche umgerechnet.

## Beschreibung

Die Erfindung betrifft ein modulares Display für die Bild- und/oder Zeichenwiedergabe, welches vorzugsweise zur Wiedergabe durch mobile Kommunikationsgeräte ausgegebener Daten vorgesehen ist. Allerdings beschränkt sich der Einsatz des modularen Displays nicht auf den Einsatz in der Telekommunikation. Insoweit soll die Tatsache, dass die Erfindung im folgenden im Wesentlichen in Bezug auf ihren Einsatz für Telekommunikationsgeräte dargestellt wird, nicht als Beschränkung anzusehen sein.
Moderne Telkommunikationsnetze, beispielsweise Mobilfunknetze neuerer Generationen, wie UMTS-Netze, erlauben die hochfrequente Übertragung großer Datenmengen und damit einen differenzierten und komplexen Informationsaustausch. Informationen werden vom Menschen im allgemeinen in visueller Form am besten erfasst. Im Hinblick auf die ständige weitere Verkleinerung von Telekommunikationsgeräten, wie Handys, ergibt sich jedoch hierbei das Problem, dass deren geringe Abmessungen, genauer die geringen Abmessungen ihrer Displays den Erfordernissen einer qualitativ guten Darstellung der Vielzahl wiederzugebender Informationen zumeist nicht entsprechen. Auf der anderen Seite spielt zum Beispiel gerade bei jugendlichen Nutzern, welche beim Mobilfunk regen Gebrauch von dem sogenannten SMS-Dienst machen, ein die Darstellung auch längerer Nachrichten ermöglichendes Display eine nicht unbeachtliche Rolle und ist unter Umständen sogar kaufentscheidend. Die Displays auch moderner Mobilfunkgeräte bilden daher insoweit aufgrund der bereits angesprochenen geringen Größe, der geringen Auflösung und einer vielfach zu verzeichnenden Licht- bzw. Kontrastschwäche einen gewissen Schwachpunkt im Verhältnis zu der sonstigen, teilweise sehr komplexen Funktionalität der Geräte.
Durch die DE 100 60 743 wird daher eine Lösung vorgeschlagen, bei der das Display aus mehreren durch einen Klappmechanismus miteinander verbundenen Segmenten besteht. Um die visuelle Wahrnehmung des technisch bedingten Randes um die einzelnen Segmente zu vermeiden, weisen diese einen speziellen optischen Vorsatz in Form einer Linsenanordnung auf. Auf diese Weise ist es möglich, trotz geringen Bauvolumens Informationen großflächig wiederzugeben. Das in der zuvor zitierten Schrift dargestellte Prinzip ist in ähnlicher Form bereits vom Einsatz sogenannter Monitorwände bekannt. Hierbei werden wie beispielhaft in der DE 34 24 877 A1 dargestellt, mehrere Bildschirme zu einer großflächigen Bildwiedergabeeinheit zusammengefasst. Entsprechend der in der Schrift beschriebenen Lösung kommt ebenfalls ein die Ränder zwischen den Bild-schirmen visuell unterdrückendes optisches System zum Einsatz. Bei dem in der erstgenannten Schrift beschriebenen Display handelt es sich hinsichtlich seiner möglichen Gesamtdarstellungsfläche um ein Display mit festen Ausmaßen, bei welchem die wiederzugebenden Informationen, veranlasst durch das die Wiedergabeeinheit ansteuernde Gerät auf die einzelnen Segmente verteilt, ausgegeben werden. Auch bei der in der DE 34 24 877 A1 offenbarten Anordnung zur Großdarstellung von Fernsehbildern erfolgt die Ansteuerung der das großflächige Display ausbildenden Monitore hinsichtlich der Verteilung der Bildinformationen auf die Teilbereiche des Displays durch eine externe Elektronik. Die Elektronik und das Großflächendisplay sind dabei genau aufeinander abgestimmt. Insbesondere werden die Möglichkeiten einer eventuellen Veränderung der Displayabmessungen insoweit nicht durch das Display selbst bestimmt. In Bezug auf eine Übertragung dieses Prinzips, beispielsweise auf Telekommunikationsgeräte, bedeutet dies aber, dass ein mit einer vergleichbaren Technik ausgestattetes Gerät, zwar mit einem großen Display ausgestattet werden könnte, letztlich aber in seiner Konfiguration festgelegt wäre.

Aufgabe der Erfindung ist es, ein Display zu schaffen, welches vorzugsweise für den Einsatz an bzw. in mobilen Telekommunikationsgeräten geeignet und im Hinblick auf seine Größe sehr variabel an die insbesondere durch die Art der wiederzugebenden Informationen bestimmten Erfordernisse angepasst werden kann.

Das modulare Display besteht gemäß der Erfindung aus einem in elektronische Geräte zur Ausgabe visualisierbarer Daten integrierten oder an derartige Geräte anschließbaren Grundmodul und mit diesem Grundmodul sowie untereinander verbindbaren Erweiterungsmodulen. Das Grundmodul verfügt dabei über eine Steuer- und Bildverarbeitungseinheit. Alle Displaymodule weisen an ihren einander zugewandten Außenkanten elektrische Verbindungselemente und Mittel zur gegenseitigen Befestigung auf. In erfindungswesentlicher Weise ist das Display insbesondere durch den Nutzer des aufnehmenden oder daran anschließbaren elektronischen Gerätes hinsichtlich seiner Größe in diskreten Schritten frei skalierbar. Dabei wird gemäß der Erfindung durch die Steuer- und Bildverarbeitungseinheit des Grundmoduls aufgrund eines Datenaustausches mit den mit ihm verbundenen Erweiterungsmodulen die Anzahl zusammengefügter Displaymodule erkannt sowie die an dem Gesamtdisplay eingehenden Bild- oder Zeichendaten zur Visualisierung auf der gesamten für die Darstellung zur Verfügung stehenden Displayfläche umgerechnet. Selbstverständlich umfasst dabei die elektrische Verbindung der Module zumindest Verbindungen im Hinblick auf den Austausch der für die Erkennung ihrer Anzahl relevanten Daten mit dem Grundmodul sowie für die Übertragung der zu visualisierenden Daten. Bei entsprechender Gestaltung der hierzu erforderlichen elektrischen Verbindungselemente können die im Anspruch genannten Mittel zur gegenseitigen Befestigung der Module von diesen mit umfasst sein.
Vorteilhafterweise sind die Displaymodule in Bezug auf die zur Darstellung nutzbaren Fläche nahezu randlos ausgebildet. Gemäß einer bevorzugten Ausführungsform weisen die Module auf ihrer der Bild- oder Zeichenwiedergabe dienenden Fläche außerdem eine Linsenoptik auf, durch welche für den Betrachter eine zur tatsächlichen Darstellungsebene parallel verlaufende virtuelle Bildebene unter Ausblendung der für die bildliche Darstellung nicht nutzbaren Randbereiche der Displaymodule entsteht. Entsprechend einer weiteren vorteilhaften Weiterbildung verfügt das Grundmodul über ein Laufwerk oder einen Slot zur Aufnahme eines Wechselspeichermediums. Gemäß einer Möglichkeit dieser Ausstattungsvariante ist das Laufwerk bzw. der Slot zur Aufnahme von Wechselspeichermedien vorgesehen, die als Datenquelle für die auszugebenden Bilder oder Zeichen dienen. Dies entspricht dann im Grunde der vorgesehenen Variante, nach der das Grundmodul integraler Bestandteil eines Bild- oder Zeichendaten ausgebenden Gerätes ist.
Die Steuer- und Bildverarbeitungseinheit des Grundmoduls wird entsprechend einer praxisgerechten Ausbildung der Erfindung durch eine von einem Mikroprozessor gesteuerte Schaltungseinheit mit Speicherbausteinen sowie peripheren Bausteinen (Buscontroller, Portcontroller Speichermanager u. ä.), insbesondere auch für die Bildverarbeitung (Grafikchips u. dgl.) realisiert. Daher kann es sich bei der Ausbildung mit einem Laufwerk oder einem Slot auch um eine Gestaltungsvariante der Erfindung handeln, bei welcher mittels der in das Laufwerk bzw. den Slot einzuführenden Wechselmedien eine Aktualisierung der von der Steuer- und Bildverarbeitungseinheit verarbeiteten Software ermöglicht ist.
Die Stromversorgung des Grundmoduls und der Erweiterungsmodule kann auf unterschiedliche Weise erfolgen Entsprechend einer möglichen Variante der Erfindung werden sowohl das Grundmodul als auch die Erweiterungsmodule durch von den Modulen aufnehmbare Batterien oder Akkumulatoren versorgt. Vorteilhafter ist es jedoch, wenn zumindest das Grundmodul durch das die Bilddaten ausgebende elektronische Gerät mit Strom versorgt wird. Zweckmäßigerweise werden auch bei dieser Variante die Erweiterungsmodule durch Batterien bzw. Akkumulatoren gespeist. Dies ist insoweit günstig, als wegen der im Grunde freien Skalierbarkeit der Anordnung deren Gesamtstrombedarf und damit die vom ausgebenden Gerät bereitzustellende Strommenge von vornherein nicht bekannt ist. Selbstverständlich ist es darüber hinaus auch möglich, dass das Grundmodul über eine eigenständige Stromversorgung mit einem Netzanschluss verfügt. In diesem Falle könnten dann auch die Erweiterungsmodule durch das Grundmodul versorgt werden, wobei hinsichtlich der Grundmodule möglicherweise unterschiedliche Typen entsprechend der maximal daran anzuschließenden Anzahl von Erweiterungsmodulen gefertigt werden können. Wenn jedoch auch hierbei eine weitergehende Skalierbarkeit erhalten bleiben soll, wäre für die Erweiterungsmodule ebenfalls der Stromversorgung durch eigene Batterien/Akkumulatoren der Vorzug zu geben.
Zweckmäßigerweise erfolgt eine gewisse mechanische Befestigung der Displaymodule aneinander bereits durch deren vorzugsweise mittels entsprechenden Kontaktbauelementen hergestellte (Stecker und Gegenstück) elektrische Verbindung. Zur Erhöhung der mechanischen Stabilität sind jedoch weitere Mittel zur mechanischen Befestigung vorgesehen. Dabei kann es sich gemäß einer möglichen Ausgestaltung um Magnete handeln.

Nachfolgend soll die Erfindung anhand eines Ausführungsbeispiels näher erläutert werden. dabei zeigen:
- Fig. 1a:: Das Grundmodul
- Fig. 1b bis Fig.1d:: Mehrere Varianten der Erweiterung des Grundmoduls mit Erweiterungsmodulen
- Fig. 2:: Das Grundmodul mit mechanischen Verbindungsmitteln für die Erweiterungsmodule in einer Ausbildung zur Aufnahme von Wechselspeichermedien.
- Fig. 3:: Vorder- und Rückseite eines Displaymoduls.
- Fig. 4:: Ein Aufbewahrungsbehältnis für die Displaymodule

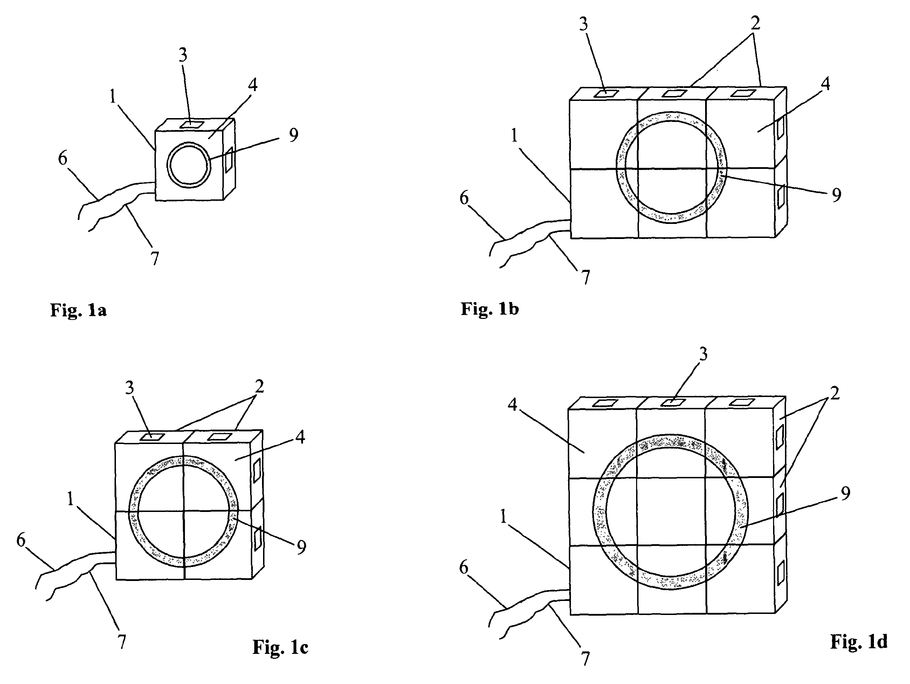

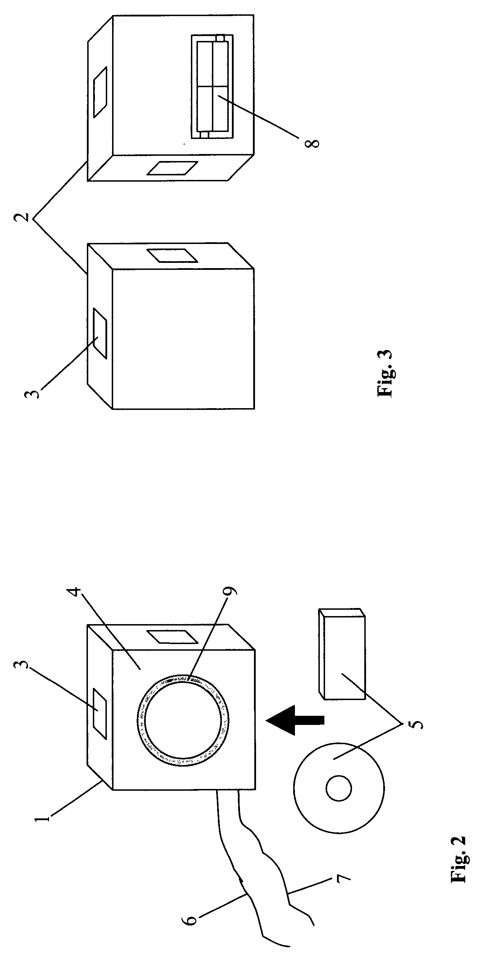

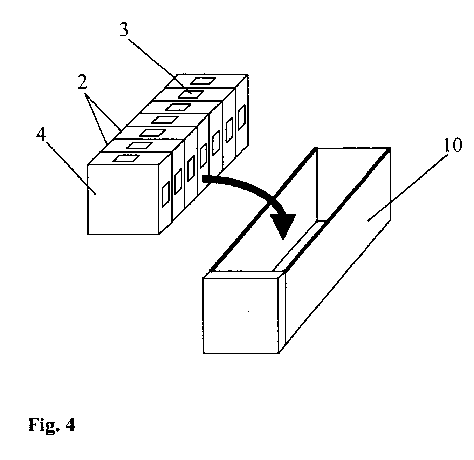

Durch die Figuren 1a bis 1d wird das Grundprinzip der Erfindung verdeutlicht. Mit einem im dargestellten Beispiel separaten (nicht in ein Ausgabegerät integriertes) Grundmodul 1 sind zum Erhalt von Displays verschiedener Größen Erweiterungsmodule 2 in unterschiedlicher Anzahl verbindbar. Durch die Fig. 1b bis 1d sind beispielhaft die hierbei entstehenden Displays unterschiedlicher Form und Größe dargestellt. Das Grundmodul 1 verfügt über eine Anschlussleitung 6 zur Stromversorgung aus einem bildausgebenden Gerät. Außerdem ist eine (mehradrige) Datenleitung 7 für die Bilddaten vorgesehen. Von den für den Zweck der Erweiterung anschließbaren Erweiterungsmodulen 2 unterscheidet sich das Grundmodul 1 weiterhin darin, dass es über eine in der Zeichnung nicht dargestellte Steuer- und Bildverarbeitungseinheit verfügt. Beim Anschluss eines oder mehrerer Erweiterungsmodule 2 wird durch diese Steuer- und Bildverarbeitungseinheit auf der Grundlage eines mit den Erweiterungsmodulen 2 erfolgenden Datenaustausches zunächst festgestellt, aus wie vielen Displaymodulen 1, 2 das Gesamtdisplay zusammengesetzt ist. Darauf basierend werden die von dem angeschlossenen Ausgabegerät (in der Fig. nicht dargestellt) kommenden Bilddaten durch die Steuer- und Verarbeitungseinheit des Grundmoduls 1 so umgerechnet, dass die Bildinformation 9 in der durch die Fig. 1a bis 1d angedeuteten Weise auf die einzelnen Displaymodule 1, 2 verteilt wird. Vorzugsweise handelt es sich bei der Steuer- und Bildverarbeitungseinheit um ein von einem Mikroprozessor gesteuertes System. Die Erweiterung des Grundmoduls 1 mit den Erweiterungsmodulen 2 erfolgt dabei nach dem aus der PC-Technik bekannten Plug-and-Play-Prinzip. Selbstverständlich bedingt dies das Vorhandensein entsprechender, einen Datenaustausch mit dem Grundmodul ermöglichender Schaltungseinheiten in den Erweiterungsmodulen 2. Die hierzu erforderlichen schaltungstechnischen Mittel sind dem Fachmann jedoch geläufig und sollen hier, da sie nicht Gegenstand der Erfindung sind, nicht näher erläutert werden. Eine spezielle Weiterbildung des Grundmoduls 1 ist in der Fig. 2 dargestellt. Bei dieser Variante verfügt das Grundmodul 1 über ein Laufwerk oder einen Slot zur Aufnahme eines Wechselspeichermediums 5, beispielsweise einer CD oder eines Halbleiterspeichers. Mittels des Wechselspeichermediums 5 ist es beispielsweise möglich, die zur Steuerung und Bildverarbeitung in dem Grundmodul 1 ablaufende Software durch Updates zu aktualisieren. Da das Grundmodul 1 im Sinne der Erfindung auch in ein elektronisches Gerät integriert sein kann, wobei das Grundmodul 1 dann also praktisch selbst als Bildausgabegerät ausgebildet ist, kann es sich bei dem Wechselspeichermedium 5 aber auch um eine Datenquelle für Bilder oder Zeichen 9 handeln. Hierbei würden dann jedoch die in der Fig. dargestellten Leitungen 6, 7 für die Stromversorgung und die Übertragung der Bilddaten entfallen.
Wie aus der Fig. 2 ersichtlich, ist das Grundmodul 1 mit den Erweiterungsmodulen 2 über spezielle Verbindungseinheiten (-mittel) 3 verbindbar. Neben der Funktion des elektrischen Verbindens können diese Verbindungseinheiten 3 beispielsweise Magnete umfassen und so gleichzeitig der mechanischen Verankerung der Modulteile 1, 2 dienen. Für die Stromversorgung der Displaymodule 1, 2 sind unterschiedliche Varianten denkbar. Im Hinblick auf eine möglichst freie Skalierbarkeit sollten dabei die Erweiterungsmodule 2 über eine autarke Energieversorgung in Form von Batterien oder Akkumulatoren 8 verfügen. In der durch die Fig. 3 beispielhaft dargestellten Ausbildung, welche ein derartiges Modul 2 in einer Vorder- sowie in einer Rückansicht darstellt, ist daher auf der Rückseite des Moduls 2 ein Aufnahmefach für eine Batterie 8 vorgesehen. Die Displaymodule 1, 2 können unter Ausnutzung der Sammelleidenschaft in unterschiedlichen Farben angeboten werden und so das Zusammenstellen optisch unterschiedlich aussehender Displays (vergleichbar mit wechselbaren Handyschalen) ermöglichen.
Auch im Hinblick auf die Formgebung ist die durch die Zeichnungen dargestellte Ausbildung der Module 1, 2 nur als beispielhaft anzusehen. So sind auch dreieckige, sechseckige, achteckige oder andere einander ergänzende Verläufe von Außenkonturen für die Module 1, 2 denkbar. Vorteilhafterweise verfügen die Module 1, 2 über einen in den Zeichnungen nicht dargestellten optischen Vorsatz (Linsenanordnung), mittels welchem für den Betrachter eine virtuelle Abbildungsebene entsteht, so dass er die Ränder im Bereich der Übergänge der Module 1, 2 visuell nicht wahrnimmt. Für eine hinsichtlich ihrer äußeren Form kubische oder quaderförmige Ausbildung der Module 1, 2 ist durch die Fig. 4 ein Beispiel für ein mögliches Aufbewahrungsbehältnis 10 wiedergegeben.

### Liste der verwendeten Bezugszeichen

- 1: Grundmodul
- 2: Erweiterungsmodul
- 3: elektrische Verbindungselemente und Mittel zur Befestigung
- 4: Displayfläche
- 5: Wechselspeichermedium
- 6: Anschlussleitung
- 7: Datenleitung
- 8: Batterie, Akkumulator
- 9: Bild, Zeichen bzw. Bildinformation
- 10: Aufbewahrungsbehältnis

## Patentansprüche

1. Modulares Display für die Bild- und/oder Zeichenwiedergabe, welches aus einem in elektronische Geräte zur Ausgabe visualisierbarer Daten integrierten oder an derartige Geräte, vorzugsweise mobile Telekommunikationsgeräte, anschließbaren Grundmodul (1) mit einer Steuer- und Bildverarbeitungseinheit und einem oder mehreren separaten, mit dem Grundmodul (1) sowie untereinander zusammenfügbaren Erweiterungsmodulen (2) besteht, wobei die Displaymodule an ihren einander zugewandten Außenkanten elektrische Verbindungselemente und Mittel (3) zu ihrer gegenseitigen Befestigung aufweisen und das durch das Zusammenfügen der Displaymodule (1, 2) erhältliche Display im Hinblick auf die zur Bild- und/oder Zeichenwiedergabe zur Verfügung stehende Fläche in diskreten Schritten skalierbar ist, indem durch die Steuer- und Bildverarbeitungseinheit des Grundmoduls(1) aufgrund eines Datenaustausches mit den mit ihm verbundenen Erweiterungsmodulen (2) deren Anzahl erkannt sowie die von einem angeschlossenen elektronischen Gerät eingehenden Bild- oder Zeichendaten zur Visualisierung auf der für die Darstellung nutzbaren Gesamtdisplayfläche umgerechnet werden.

2. Modulares Display nach Anspruch 1, **dadurch gekennzeichnet, dass** die Displaymodule (1, 2) für die Wiedergabe von Bilddaten in Bezug auf die zur Darstellung nutzbare Fläche nahezu randlos sind.

3. Modulares Display nach Anspruch 1 oder 2, **dadurch gekennzeichnet, dass** die Displaymodule (1, 2) auf ihrer der Bild- oder Zeichenwiedergabe dienenden Displayfläche (4) eine Linsenoptik aufweisen, durch welche für den Betrachter eine zur tatsächlichen Darstellungsebene parallelverlaufende virtuelle Bildebene unter Ausblendung der für die bildliche Darstellung nicht nutzbaren Randbereiche der Displaymodule (1, 2) entsteht.

4. Modulares Display nach einem der Ansprüche 1 bis 3, **dadurch gekennzeichnet, dass** das Grundmodul (1) über ein Laufwerk oder einen Slot zur Aufnahme eines Wechselspeichermediums (5) verfügt.

5. Modulares Display nach Anspruch 4, **dadurch gekennzeichnet, dass** das Laufwerk oder der Slot zur Aufnahme von Wechselspeichermedien (5) vorgesehen ist, die als Datenquelle für auszugebende Bilder bzw. Zeichen (9) dienen.

6. Modulares Display nach einem der Ansprüche 1 bis 3, **dadurch gekennzeichnet, dass** es sich bei der Steuer- und Bildverarbeitungseinheit um eine von einem Mikroprozessor gesteuerte Schaltungseinheit mit Speicherbausteinen sowie peripheren Bausteinen zur Bildverarbeitung handelt.

7. Modulares Display nach Anspruch 4 und 6, **dadurch gekennzeichnet, dass** das Laufwerk oder der Slot zur Aufnahme von Wechselspeichermedien (5) vorgesehen ist, die zur Aktualisierung einer von der Steuer- und Bildverarbeitungseinheit des Grundmoduls (1) verarbeiteten Software dienen.

8. Modulares Display nach einem der Ansprüche 1 bis 7, **dadurch gekennzeichnet, dass** die Stromversorgung des Grundmoduls(1), bei einer separaten zum Anschluss an elektronische Geräte dienenden Ausbildung, sowie die Stromversorgung der Erweiterungsmodule mittels von diesen aufnehmbaren Batterien oder Akkumulatoren (8) erfolgt.

9. Modulares Display nach einem der Ansprüche 1 bis 7, **dadurch gekennzeichnet, dass** die Stromversorgung des Grundmoduls (1) durch das die zu visualisierenden Daten ausgebende elektronische Gerät erfolgt, während die Zusatzmodule (2) durch von ihnen aufnehmbare Batterien oder Akkumulatoren (8) gespeist werden.

10. Modulares Display nach einem der Ansprüche 1 bis 7, **dadurch gekennzeichnet, dass** das Grundmodul (1) über einen Netzanschluss und eine eigene Stromversorgungseinheit verfügt, über welche auch die Stromversorgung an das Grundmodul angeschlossener Erweiterungsmodule (2) erfolgt.
Modulares Display nach einem der Ansprüche 1 bis 10, **dadurch gekennzeichnet, dass** es sich bei den Mitteln (3) zur gegenseitigen Befestigung der Displaymodule um Magnete handelt.
